# EUROPÄISCHE PATENTSCHRIFT

(11) **EP 2 526 378 B1**
(45) Veröffentlichungstag und Bekanntmachung des Hinweises auf die Patenterteilung: **13.09.2017**
(21) Anmeldenummer: 11703119.5
(22) Anmeldetag: 18.01.2011
(51) Int. Cl.: G01C 21/00, G05D 1/02

(54) **VERFAHREN UND SYSTEM ZUM ERFASSEN DER POSITION EINES FAHRZEUGES**
METHOD AND SYSTEM FOR SENSING THE POSITION OF A VEHICLE
PROCÉDÉ ET SYSTÈME POUR DÉTECTER LA POSITION D'UN VÉHICULE

(30) Priorität: 18.01.2010 AT 602010
(43) Veröffentlichungstag der Anmeldung: 28.11.2012
(73) Patentinhaber: Robert Bosch GmbH, 70442 Stuttgart (DE)
(72) Erfinder: ESSATI, Alec, A-1160 Wien (AT); WILDENAUER, Horst, A-1050 Wien (AT)
(74) Vertreter: Horner, Stephan
(86) Internationale Anmeldenummer: PCT/AT2011/000030
(87) Internationale Veröffentlichungsnummer: WO 2011/085426

(56) Entgegenhaltungen:
- WO-A2-03/096052
- DE-A1-102007 021 693
- US-A1- 2009 198 371

## Beschreibung

Die Erfindung betrifft ein Verfahren und ein System zum Erfassen der Position eines Fahrzeuges in einem definierten Bereich.

Die Erfassung der aktuellen Position eines Fahrzeuges in einem definierten Bereich ist in den verschiedensten Anwendungen von hoher Bedeutung. Beispielsweise ist die Positionsbestimmung von Flurförderfahrzeugen (z.B. von Gabelstaplern) im Bereich der Lagerlogistik (Verwaltung von z.B. Produktions-, Distributionslager) von großer Bedeutung, da hierdurch z.B. eine Optimierung von logistischen Prozessen sowie eine automatische Chargenverfolgung von Waren ermöglicht wird. Hierzu sind verschiedenste Verfahren bzw. Vorrichtungen bekannt, wobei es insbesondere bekannt ist, eine absolute Referenzposition des Fahrzeuges zu erfassen ebenso wie die Relativbewegung des Fahrzeuges und somit die aktuelle Position des Fahrzeuges mit Hilfe eines Koppelnavigationssystems zu bestimmen.

Aus der DE 102 34 730 A1 ist ein Verfahren zur Positionsbestimmung eines Transportfahrzeuges innerhalb eines Wirkbereichs bekannt, in dem bewegliche, vom Transportfahrzeug transportierte erste Objekte (Transporteinheiten, Gitterboxen, Getränkekisten oder dergl.) und ortsfeste zweite Objekte (bspw. Wände, Stützpfeiler) vorhanden sind. Der Wirkbereich ist in Form einer digitalen Karte gespeichert, welche die Positionen der Objekte enthält. Der Gabelstapler weist ein mit einem Bordrechner verbundenes Laserradar (=LADAR), einen elektronischen Kompass, und ein kinematisches GPS auf, welche Messdaten an den Bordrechner liefern. Zur Positionsbestimmung des Gabelstaplers tastet das LADAR eine Kontur der Umgebung ab und erfasst dabei das in der unmittelbaren Umgebung befindliche Lagergut, woraufhin das Ergebnis dieser Abtastung mit der in einem Zentralrechner gespeicherten digitalen Karte verglichen wird; auf Grundlage dieses Vergleichs kann der Bordrechner oder der Zentralrechner eine Position des Gabelstaplers innerhalb des Wirkbereiches bestimmen. Das LADAR erfasst zudem den Abstand zwischen dem Gabelstapler und den bekannten Objekten, um ein Bild der Umgebung des Gabelstaplers zu erstellen. Aus den ermittelten Messwerten wird durch Vergleich mit den Daten der digitalen Karte die Position des Gabelstaplers mittels trigonometrischen Berechnungen und Verfahren bestimmt. Zur Verbesserung der Positionsbestimmung können zudem Daten von beweglichen dritten Objekten in der digitalen Karte vorgehalten sein, die bei der Abtastung erfasst und zur Aktualisierung des Datenbestands genutzt werden. Diese dritten Objekte können andere Transportfahrzeuge und/oder unbekannte Hindernisse umfassen. Nachteiligerweise müssen die zur Positionserfassung herangezogenen Objekte eine vermessbare Kontur aufweisen, um eine Positionsbestimmung über die Laser-Abtastung zu ermöglichen. Daher können gleiche Objekte (z.B. Stützpfeiler, Europaletten, etc.) nicht eindeutig identifiziert werden. Zudem ist es gemäß der DE 102 34 730 A1 erforderlich, Unterschiede zwischen den Abtastungen des Fahrzeuges und der zentral verwalteten Karte zu bestimmen, um daraus die exakte Position zu bestimmen. Dies bedeutet, dass eine exakte absolute Positionsbestimmung nicht möglich ist, sondern über ein Ausschließungsverfahren eine wahrscheinliche Position ermittelt wird, welche zwar bestenfalls der tatsächlichen absoluten Position entspricht, hiervon jedoch auch signifikant abweichen kann. Die bekannte Positionsbestimmung durch Laserradar-Abtastung stößt vor allem dann an ihre Grenzen, wenn sich die Umgebung ähnelt oder die Distanzen eine Abtastung verhindern bzw. einschränken (z.B. im Fall einer leeren Lagerhalle mit Stützpfeilern, bei leeren Lagerplätzen oder Lagerplätzen mit gelagerten Waren, welche eine identische Struktur aufweisen, oder im Außenbereich).

Aus der US 2009/0198371 A1 ist weiters ein System zur Warenverfolgung bekannt, mit einem ortsfesten Basissystem und mobilen Systemen, die mit Fahrzeugen verbunden sind. Das mobile System weist einen Identifikationssensor zum Erfassen von Gegenständen mit einer Codierung auf. Der überwachte Raum ist zudem mit individuell unterschiedlichen Positionsmarkierungen ausgestattet, welche im Deckenbereich angeordnet sind. Das Fahrzeug weist eine optische Positionssensoreinheit mit einer nach oben gerichteten Kamera auf, die Bilder von der Umgebung aufnimmt, um im Sichtfeld vorhandene Positionsmarkierungen zu erfassen und deren Identität festzustellen. Die Position der Positionsmarkierungen im aufgenommenen Bild wird dazu verwendet, Position und Winkelorientierung des Fahrzeuges zu erfassen. Bei Erfassung eines Positionsmarkers wird zudem der Datenbestand im Speicher eines mobilen Computersystems des Fahrzeuges aktualisiert. Dieses System weist jedoch den Nachteil auf, dass keine Positionsbestimmung möglich ist, wenn kein Marker im Blickfeld der Kamera ist, d.h. es gibt kein weiteres System, welches eine Positionsbestimmung durchführen kann. Demzufolge muss überall dort, wo eine Position benötigt wird, ein Marker im Blickfeld sein. In Lagern wird allerdings überall und zu jedem Zeitpunkt eine Positionserfassung benötigt, um auch ein Abstellen von Waren auf nicht vorgesehenen Lagerplätzen zu verfolgen. Dies wiederum bedeutet, dass das Lager mit sehr vielen Markern ausgestattet werden muss, was zu einem äußerst großen Aufwand führt, insbesondere bei großen Lagern. Zudem ist das bekannte System aufgrund der Anbringung von Markern an der Decke nachteiligerweise auf den Innenbereich beschränkt.

WO 03/096052 A2 offenbart das Prinzip einer Vorrichtung eines autonomen mobilen Systems (z.B. ein fahrerloses Transportfahrzeug in einem Blocklager). Die Vorrichtung weist ein geräteinternes Navigationssystem zur Erfassung der aktuellen Position in einer bestimmten Umgebung in Bezug auf die Umgebung beschreibende Informationsdaten aufw. Die Informationsdaten repräsentieren einerseits unveränderliche Landmarken und zudem veränderliche Landmarken, wozu bewegliche Objekte, wie beispielsweise Paletten, zählen. Das System ist für fahrerlose Fahrzeuge, wie Serviceroboter, ausgelegt.

DE 10 2007 021 693 A1 offenbart ein Hilfssystem zur Lagebestimmung eines Fahrzeugs (z.B. eines Gabelstaplers), das mit einem bordeigenen Sensor zur Erfassung der Umgebung ausgestattet ist. Hierbei kann es sich um einen rotierenden Laserscanner handeln; zudem sind als Sensoren Radar und Kameras erwähnt. Zum Absetzen eines transportierten Objektes (z.B. eine Europapalette) folgt das Fahrzeug einem vorgegeben Fahrweg, welcher durch einen Leitdraht in der Fahrbahn bestimmt sein kann. Der Sensor erfasst zudem abgestellte Objekte, deren Positionen in einem Lageverwaltungssystem aktualisiert und dem Fahrzeug zur Verfügung gestellt werden. Mit diesem Hilfssystem soll die Lagebestimmung des Fahrzeugs auch dann ermöglicht werden, wenn natürliche oder künstliche ortsgebundene Landmarken versagen.

Aus der DE 44 29 016 A1 ist ein Navigationssystem von fahrerlosen Fahrzeugen, insbesondere von Transportsystemen in Hallen, bekannt, welche mittels eines mit dem Fahrzeug bewegten bildgebenden Sensors kontrastreiche Objekte in der Umgebung, insbesondere Deckenleuchten, aufnehmen. Aus der Lage dieser Deckenleuchten werden sodann Position und Lagewinkel des Fahrzeuges bestimmt. Durch die Verwendung der kontrastreichen Deckenleuchten für die Erfassung einer absoluten Referenzposition sollen die Kosten des Navigationssystems gering gehalten werden.
Abgesehen davon, dass die Unterscheidung - üblicherweise gleich ausgestalteter - Deckenleuchten über einen optischen Sensor, z.B. bei einer CCD-Kamera oder Photodioden-Arrays, tatsächlich nicht bzw. jedenfalls nur mit einer hohen Fehlerquote machbar ist, ist zum Erfassen der Relativbewegung des fahrerlosen Fahrzeuges ein Nachlaufrad vorgesehen, das über eine vertikale Achse und um diese drehbar mit dem Fahrzeug verbunden ist. Aus dem Drehwinkel des Rades um seine Achse und aus dem Drehwinkel des horizontalen Versatzes um die vertikale Achse soll somit über eine Koppelnavigation die Position des Fahrzeuges bestimmt werden. In der Praxis haben sich derartige Nachlaufräder jedoch (insbesondere aufgrund von Problemen mit Schlupf und Drift) als äußerst ungenau erwiesen.

Aus der WO 01/13192 A1 ist weiters ein Verfahren und eine Vorrichtung zum Erfassen der Position eines Fahrzeuges bekannt, bei welchem an der Decke einer Lagerhalle zuvor reflektierende Markierungen angebracht werden müssen, welche von dem Fahrzeug beim Unterfahren einer Markierung erfasst werden können, so dass hierdurch zu diesem Zeitpunkt eine Referenzposition erfasst und gespeichert werden kann. Zudem ist gemäß der WO-Schrift ein Rad-Encoder vorgesehen, der in zeitlichen Abständen die vom Fahrzeug zurückgelegte Strecke erfasst; weiters wird mittels eines Gyroskops der Drehwinkel des Fahrzeuges erfasst. Die aktuelle Position des Fahrzeuges kann sodann mittels Koppelnavigation aus Referenzposition und der mittels Vektoraddition ermittelten relativen Wegstrecke bestimmt werden. Nachteilig ist hier insbesondere, dass die Montage der reflektierenden Markierungen im Deckenbereich einer Lagerhalle sehr aufwändig und kostenintensiv ist und zudem das Erfassen der Referenzposition nicht immer zuverlässig gewährleistet ist. Weiters ergeben sich bei der Messung der Relativbewegung mittels des Rad-Encoders und eines Gyroskops Probleme bei Schlupf und Drift (z.B. Durchdrehen der Räder) des Fahrzeuges, so dass häufig eine unrichtige relative Wegstrecke ermittelt wird. Eine Anwendung dieses Verfahrens im Außenbereich (nicht überdacht) eines Lagers ist nicht oder nur mit erheblichem Installations- und Kostenaufwand verbunden.

Um diese Nachteile bei der Erfassung der Relativbewegung zu beseitigen, wird in der EP 1 916 504 A2 vorgeschlagen, digitale Bilddaten einer Referenzfläche von aufeinander folgenden diskreten Frames zu erfassen, sodann den ersten von zwei aufeinander folgenden Frames in mehrere Makroblöcke zu unterteilen, um diese Makroblöcke darauf folgend im zweiten Frame zu ermitteln, wobei in Abhängigkeit der Verschiebungsvektoren der Positionen der Makroblöcke die Relativverschiebung des Fahrzeuges bestimmt werden kann. Hierdurch können zwar die Messungenauigkeiten, die beim Ermitteln der Relativbewegung mittels eines Rad-Encoders und eines Gyroskops auftreten, beseitigt werden. Durch die notwendige bodennahe Anbringung der Kamera ist eine Verschmutzung der Kameraoptik in hohem Maße gegeben, was zu einer hohen Ungenauigkeit bzw. einem Ausfall der Erfassung der Relativbewegung führen kann. Nachteilig ist jedoch insbesondere, dass zur Erfassung der absoluten Referenzposition auch gemäß der EP 1 916 504 nach wie vor die sehr aufwändige und kostenintensive Montage von reflektierenden Markierungen im Deckenbereich erforderlich ist.

Ein ähnliches Verfahren bzw. eine ähnliche Vorrichtung zur Erfassung einer Referenzposition eines Fahrzeuges in einer Lagerhalle ist weiters aus der US 2007/10143006 A1 bekannt. Hier werden eine Vielzahl von Transpondern am Hallenboden angebracht, mit deren Hilfe sodann eine Referenzposition des Fahrzeuges ermittelt werden soll. Auch hierbei handelt es sich um ein technisch komplexes System mit einer Vielzahl von Sensoren, die vor allem bei flächenmäßig großen definierten Bereichen einen äußerst hohen Installations- und Investitionsaufwand verursachen. Nachteilig ist jedoch insbesondere, dass die Erfassung einer Referenzposition eines Fahrzeuges nur bei Überfahren eines Transponders möglich ist und somit keine kontinuierliche Erfassung einer Referenzposition eines Fahrzeuges erfolgt, was sich insbesondere z.B. beim Abstellen von Waren an nicht mit Transpondern versehenen Lagerbereichen nachteilig auswirkt.

In der DE 103 46 596 A1 wird ebenfalls die Erfassung einer absoluten Referenzposition mit Hilfe von zuvor verlegten Messstreifen vorgeschlagen. Weiters wird mit Hilfe einer Inkrementalpositions-Erfassungseinheit durch vektorielle Summation inkrementaler Bewegungsvektoren eine relative Positionsbestimmung vorgenommen, wobei ein Parameter zum Anzeigen der Qualität der erfassten Absolutposition ermittelt wird. In Abhängigkeit von der Qualität dieses Parameters wird die Position des Fahrzeuges im vorgegebenen Bereich entweder im Absolutmodus oder jedoch im Inkrementalmodus ausgegeben, d.h. nachteiligerweise werden hier die absoluten und relativen Messergebnisse nicht miteinander verschmolzen, sondern es wird die Messung schlechterer Qualität zur Gänze verworfen.

Aus der US 2007/0150111 A1 ist noch ein omnidirektionaler Roboter bekannt, der bodenseitig einen so genannten "Optical flow"-Sensor aufweist, mit welchem die Relativbewegung des Roboters erfasst wird. Die Erfassung einer Referenzposition in einem vordefinierten Bereich ist hierbei jedoch nicht vorgesehen.

Ziel der vorliegenden Erfindung ist demzufolge, ein Verfahren und ein System der eingangs angeführten Art zu schaffen, wobei der Installations- und Investitionsaufwand zum Erfassen der Position des Fahrzeuges gering gehalten werden soll, zugleich jedoch eine genaue und robuste Positionsbestimmung ohne die nachteilige Erfassung einer reinen Relativbewegung des Fahrzeuges gewährleistet ist, wobei das Verfahren und das System sowohl im Innen- als auch im Außenbereich einsetzbar sein soll.

Erfindungsgemäß wird dies mit einem Verfahren erzielt, bei dem eine ein definiertes Koordinatensystem aufweisende digitale Karte des definierten Bereichs erstellt wird, wobei die digitale Karte stationäre Referenzmerkmale mit einem eindeutigen Identifikationsmerkmal beinhaltet, bevor von zumindest einem Teilbereich des definierten Bereichs, vorzugsweise dem gesamten definierten Bereich, digitale Bilder zum Erfassen und zur Detektion weiterer Referenzmerkmale aufgenommen werden, wobei auch stationäre und/oder temporäre Referenzmerkmale ohne eindeutiges Identifikationsmerkmal erfasst und detektiert werden und der digitalen Karte und/oder einem zugeordneten Zwischenspeicher hinzugefügt werden, so dass darauf folgend die absolute Position eines Fahrzeuges in dem definierten Bereich bestimmbar ist, indem von dem Fahrzeug aus ein digitales Bild von einem Teil des definierten Bereichs aufgenommen wird und in dem digitalen Bild Referenzmerkmale detektiert und gegebenenfalls identifiziert werden, wobei die absolute Positionsbestimmung auf Basis der detektierten und gegebenenfalls identifizierten stationären und/oder temporären Referenzmerkmale erfolgt.

Das erfindungsgemäße Verfahren weist somit zwei zeitliche Abschnitte auf. Zunächst werden in einem ersten Verfahrensschritt Referenzmerkmale in der definierten Umgebung erkannt und die Position dieser Referenzmerkmale auf Grundlage von bereits vor Verfahrensbeginn bekannten Referenzmerkmalen erfasst und deren Koordinaten in der digitalen Karte bzw. einem Zwischenspeicher abgelegt. In einem zweiten Verfahrensabschnitt wird sodann auf Basis der stationären Referenzmerkmale sowie etwaiger temporärer Referenzmerkmale jeweils die absolute Position des Fahrzeuges, d.h. das Koordinatenpaar x,y bzw. die Orientierung des Fahrzeuges in der definierten Umgebung, bestimmt. Mit Hilfe der stationären und der temporären Referenzmerkmale ist somit eine relative Positionsbestimmung, d.h. eine reine Positionsveränderung, nicht erforderlich und es kann vorteilhafterweise durchgehend eine auf absoluten, d.h. globalen, Koordinatenwerten basierende Positionsbestimmung durchgeführt werden. Aufgrund der automatischen Ein- bzw. Vermessung von Referenzmerkmalen können aufwändige geodätische Vermessungen vermieden werden und ist zudem vorteilhafterweise auf einfache Art und Weise möglich die digitale Karte des definierten Bereichs bei etwaigen Veränderungen oder Erweiterungen des definierten Bereichs (z.B. Änderungen der Lagerplätze, Erweiterung der Lagerfläche etc.) anzupassen.

Hinsichtlich der Typen von Referenzmerkmalen können hierbei insbesondere drei Typen unterschieden werden.

Typ 1: Stationäre Referenzmerkmale mit einem festgelegten Design, einem eindeutigen Identifikationsmerkmal und variabler Größe.

Diese besitzen z.B. eine viereckige Form (4 Eckpunkte) und können aus einem schwarzen Rand, einer weißen Fläche und schwarzen Zeichen (Buchstaben, Ziffern, Symbolen) bestehen. Die Zeichenkombination stellt ein eindeutiges Identifikationsmerkmal dar.

Beispiele sind am Boden, an Wänden oder Masten befindliche Markierungen (z.B. Lagerplatz- oder Lagergangmarkierung) oder Beschilderungen. Die Größe dieser Objekte kann je nach Umgebungsbedingung variieren. Markierungen bei Lagerplätzen können z.B. 40 x 30 cm groß sein, Markierungen in Lagergängen sind mit z.B. 80 x 60 cm etwas größer, Beschilderungen an Wänden oder Masten können z.B. auch 200 x 150 cm groß sein.

Typ 2: Stationäre Referenzmerkmale mit einem festgelegten Design, keinem eindeutigen Identifikationsmerkmal und variabler Größe.

Diese Referenzmerkmale können jegliche stationäre kontrastreiche Objekte in der definierten Umgebung sein (z.B. Feuerlöscher, Regale, Masten, etc.). Ein weiteres Beispiel wäre ein rechter Winkel, welcher sich durch zwei Markierungslinien am Boden, welche sich ca. 90 Grad zueinander befinden, ergibt.
Diese Referenzmerkmale besitzen kein eigenes eindeutiges Identifikationsmerkmal (z.B. in Form einer Zeichenkombination).

Typ 3: Stationäre Referenzmerkmale mit keinem festgelegten Design, keinem eindeutigen Identifikationsmerkmal und variabler Größe.

Diese Referenzmerkmale sind alle kontrastreichen Merkmale jeglicher Größe und Form (z.B. Kanten von Waren oder Etiketten, Verschmutzungen am Boden, Fahrzeuge, etc.), welche sich zumeist nur für eine bestimmte Zeitdauer stationär an einem Ort befinden. Diese besitzen kein eigenes eindeutiges Identifikationsmerkmal (z.B. in Form einer Zeichenkombination).

Die digitale Karte des definierten Bereichs bzw. der definierten Umgebung (z.B. Lager) besitzt ein definiertes (globales) Koordinatensystem, beinhaltet die Referenzmerkmale und deren Eigenschaften (z.B. Koordinaten, Identifikationsmerkmal, etc.) und kann zur elektronischen Datenverarbeitung verwendet werden. Darüber hinaus kann die digitale Lagerkarte weitere spezifische Eigenschaften der definierten Umgebung beinhalten (z.B. globale Koordinaten und Abmessungen von Lagerplätzen, etc.).

Um zugleich mit der Positionsbestimmung des Fahrzeuges auch eine kontinuierliche Verfolgung von etwaigen in dem definierten Bereich aufbewahrten Waren zu ermöglichen, ist es von Vorteil, wenn beim Abstellen einer ein Identifikationsmerkmal aufweisenden Ware in dem definierten Bereich die Koordinaten der Ware, vorzugsweise der Eckpunkte der Ware, dem Zwischenspeicher hinzugefügt werden. Da die mittels des Identifikationsmerkmals, d.h. insbesondere eines Barcodes und/oder einer Klarschrift, z.B. EAN 128, eindeutig identifizierbare Ware, deren Koordinaten bekannt sind, ebenso zur absoluten Positionsbestimmung des Fahrzeuges herangezogen werden kann und somit die Positionsbestimmung noch robuster und genauer gemacht werden kann, besonders an jenen Stellen, wo eine hohe Genauigkeit gefordert ist, ist es günstig, wenn bei Detektion eines Identifikationsmerkmals einer Ware und zumindest eines Eckpunkts der Ware mittels der im Zwischenspeicher enthaltenen Koordinaten eine absolute Positionsbestimmung des Fahrzeuges erfolgt. Darüber hinaus kann eine Plausibilitätskontrolle der Postion durch die Nutzung der Wareninformation durchgeführt werden.

Hinsichtlich eines besonders robusten Systems ist es demzufolge von Vorteil, wenn die Informationen von mehreren absoluten Positionsbestimmungen, d.h. insbesondere jene in Abhängigkeit der stationären Referenzmerkmale sowie unter Berücksichtigung der temporären Referenzmerkmale und/oder der Positionsbestimmung auf Grundlage der Wareninformation, verwendet werden. Demzufolge ist es vorteilhaft, wenn eine absolute Positionsbestimmung mittels Verfolgung von stationären Referenzmerkmalen und eine absolute Positionsbestimmung mittels Verfolgung von temporären Referenzmerkmalen und/oder der Identifikation einer Ware erfolgt und die absolute Position des Fahrzeuges über eine Fusion von mittels der absoluten Positionsbestimmungen ermittelten Koordinaten erfolgt. Diesbezüglich ist anzumerken, dass Zustandsmessungen prinzipiell immer fehlerbehaftet sind, d.h. im Allgemeinen geben die Messungen den wahren Zustand nicht exakt und völlig korrekt wieder. Aufgrund der Messungen ist es jedoch möglich den exakten Zustand zu schätzen bzw. anzunähern. Durch die Fusion der geschätzten Koordinaten von mehreren absoluten Positionsbestimmungen kann somit über ein stochastisches Verfahren der Zustandsschätzung in einem dynamischen Prozess basierend auf einem Filtersystem, z.B. bekannten Partikelfilter, ein gesamthaftes Regelwerk für Vorwissen hinterlegt werden. Über die Sammlung von einer hohen Anzahl an Stichproben (Partikel) nähert sich die Positionsbestimmung somit dem tatsächlichen exakten Wert an.

Hinsichtlich einer Positionsbestimmung ist es von Vorteil, wenn nach Aufnahme eines digitalen Bildes zwecks Positionsbestimmung zumindest ein Bildausschnitt, in welchem sich zumindest ein stationäres Referenzmerkmal befindet, ausgewählt und gespeichert wird, und der Bildausschnitt zur absoluten Positionsbestimmung des Fahrzeuges auf Grundlage von Markertracking mittels Transformation in ein nachfolgend aufgenommenes digitales Bild projiziert wird.

Zusätzlich und unabhängig von dem Tracking stationärer Referenzmerkmale ist es günstig, wenn zugleich hierzu eine weitere absolute Positionsbestimmung mittels dreidimensionaler Merkmale erfolgt, wobei es hier von Vorteil ist, wenn vorzugsweise jedes in einem aufgenommenen digitalen Bild identifizierte Referenzmerkmal, das nicht in der digitalen Karte gespeichert ist, zwischengespeichert wird und das zwischengespeicherte Referenzmerkmal zur absoluten Positionsbestimmung verwendet wird, sofern das zwischengespeicherte Referenzmerkmal in einem nachfolgend aufgenommenen digitalen Bild identifiziert wird.

Zur weiteren Verbesserung der Genauigkeit der Positionsbestimmung bzw. der Robustheit des Verfahrens zur Positionsbestimmung ist es günstig, wenn bei der Bestimmung der absoluten Position nicht be-/durchfahrbare bzw. erreichbare Teilbereiche des definierten Bereichs bzw. maximal mögliche Positionsveränderungen innerhalb einer Zeitspanne aufgrund von Leistungsdaten des Fahrzeuges in Kombination mit einer Bewegungshistorie berücksichtigt werden. Hierbei kann insbesondere berücksichtigt werden, dass z.B. Masten, Wände, Tore, Regale, Waren etc. von dem Fahrzeug, dessen Position zu bestimmen ist, nicht be- bzw. durchfahren werden können. Ebenso können Teilbereiche ausgeschlossen werden, welche das Fahrzeug aufgrund z.B. dessen Geometrie (Länge, Breite, Höhe) nicht befahren bzw. erreichen kann. Darüber hinaus kann in Abhängigkeit der maximalen Geschwindigkeit, des minimalen Wendekreises, der maximalen Beschleunigung bzw. Verzögerung etc. in Kombination mit dem zuvor zurückgelegten Weg, der Geschwindigkeit, Beschleunigung und Rotation eine maximal mögliche Positionsveränderung berücksichtigt werden.

Das System der eingangs angeführten Art ist dadurch gekennzeichnet, dass ein Speichern zur Speicherung einer ein definiertes Koordinatensystem des definierten Bereichs aufweisenden digitalen Karte vorgesehen ist, wobei die digitale Karte stationäre Referenzmerkmale mit einem eindeutigen Identifikationsmerkmal beinhaltet, und eine bildgebende Sensoreinrichtung zum Erfassen und zur Detektion weiterer stationärer und/oder temporärer Referenzmerkmale ohne eindeutiges Identifikationsmerkmal vorgesehen ist, die der digitalen Karte und/oder einem zugeordneten Zwischenspeicher zugeordnet sind, wobei die bildgebende Sensoreinrichtung zudem zum Erfassen eines digitalen Bildes eines Teil des definierten Bereichs und zur Detektion und gegebenenfalls Identifikation von in dem digitalen Bild enthaltenen Referenzmerkmalen vorgesehen ist, so dass eine absolute Positionsbestimmung eines mit der bildgebenden Sensoreinrichtung versehenen Fahrzeuges auf Basis der detektierten und gegebenenfalls identifizierten stationären und/oder temporären Referenzmerkmale erfolgt.

Die mit der erfindungsgemäßen Vorrichtung einhergehenden vorteilhaften Effekte sind vorstehend bereits im Zusammenhang mit dem erfindungsgemäßen Verfahren beschrieben, sodass zwecks Vermeidung von Wiederholungen auf vorstehende Ausführung verwiesen wird.

Die Erfindung wird nachstehend anhand eines in den Zeichnungen dargestellten bevorzugten Ausführungsbeispiels, auf das sie jedoch nicht beschränkt sein soll, noch näher erläutert. Im Einzelnen zeigen in den Zeichnungen:
Fig. 1 eine perspektivische Ansicht eines Flurfahrzeuges mit einer bildgebenden Sensoreinrichtung;
Fig. 2 eine weitere perspektivische Ansicht des Flurfahrzeuges gemäß Fig. 1;
Fig. 3 ein eine Vielzahl von Lagerplätzen aufweisendes Lager mit verschiedenen Referenzmerkmalen;
Fig. 4 schematisch eine perspektivische Ansicht einer in dem Lager befindlichen Ware;
Fig. 5 ein Flussdiagramm beider Schritte eines Verfahrens zur Erfassung der Position des Fahrzeuges;
Fig. 6 ein Flussdiagramm eines Verfahrensabschnitts zur Erkennung und Vermessung von Referenzmerkmalen;
Fig. 7 ein Flussdiagramm zur absoluten Positionsbestimmung mittels einer kontinuierlichen Verfolgung von stationären Referenzmerkmalen mit festgelegtem Design; und
Fig. 8 ein Flussdiagramm der absoluten Positionsbestimmung mittels einer kontinuierlichen Verfolgung von temporären Referenzmerkmalen ohne festgelegtes Design und ohne eindeutiges Indentifikationsmerkmal.

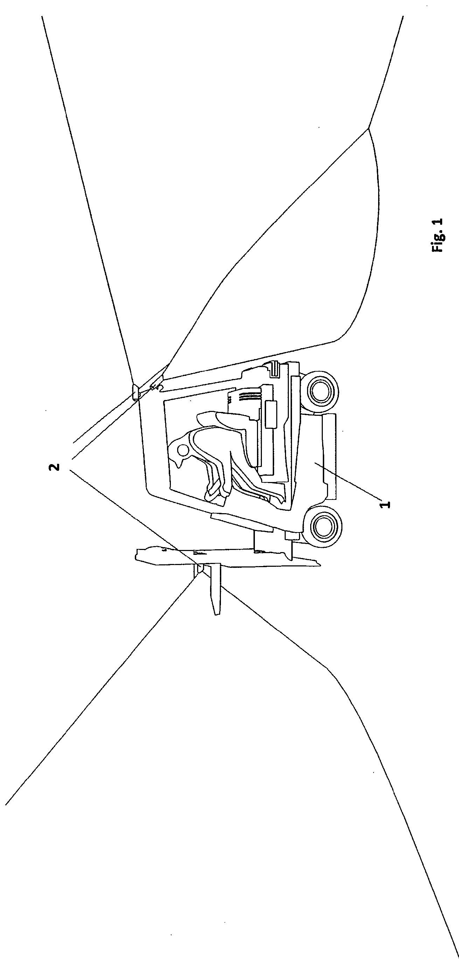

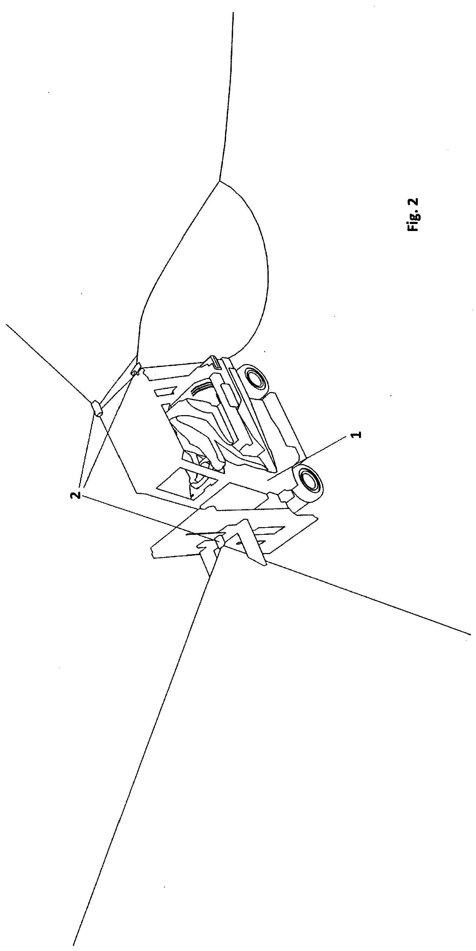

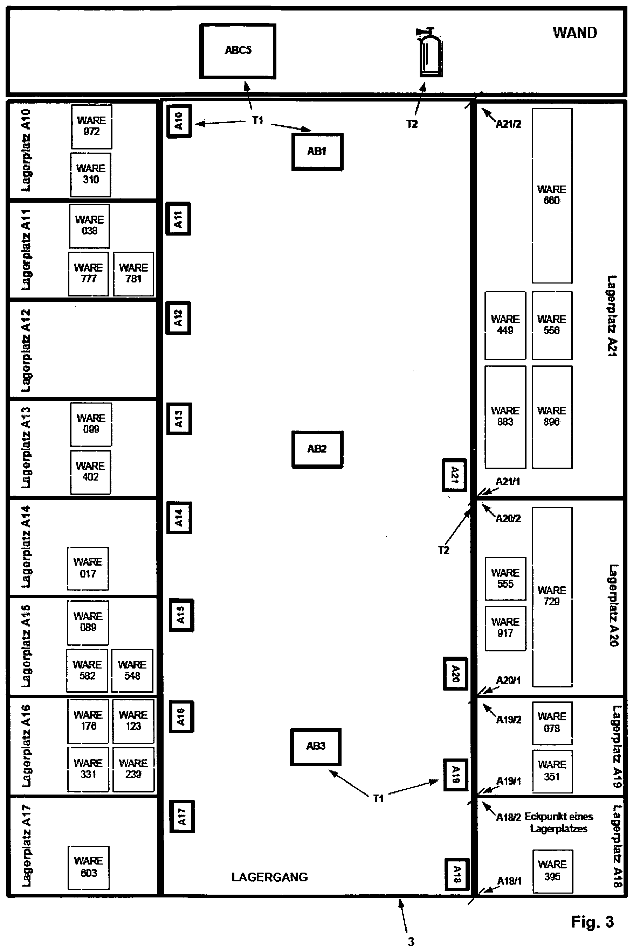

In den Figuren 1 und 2 ist ein Beispiel für ein Fahrzeug 1 dargestellt, dessen Position in einem in Fig. 3 dargestellten definierten Bereich 3, z.B. einem Lager, zu bestimmen ist. Hierbei ist ersichtlich, dass das Fahrzeug 1 mehrere bildgebende Sensoreinrichtungen, vorzugsweise digitale Kameras 2, aufweist. Vorzugsweise erfolgt die Anbringung am Fahrzeug 1 derart, dass das durch die digitale Kamera 2 erfasste Blickfeld in Richtung Heck des Fahrzeuges 1 gerichtet ist. Dies ist vorteilhaft, da bei Flurfahrzeugen häufig ein eingeschränktes Bildfeld in Richtung Front des Fahrzeuges 1 bei Transport von Waren auftritt. Bei Anwendung von mehreren digitalen Kameras 2 kann - wie in Fig. 1 ersichtlich - die Anbringung derart erfolgen, dass das Blickfeld der Kameras 2 sowohl Richtung Heck als auch Richtung Front gerichtet ist, wobei mit den Kameras 2 selbstverständlich auch die seitliche Umgebung des Fahrzeuges 1 erfasst wird.

Die Kameras 2 können je nach den infrastrukturellen Gegebenheiten der Umgebung (z.B. Größe der Lagerplätze, Größe der Referenzmarkierungen, Größe der Etiketten zur Warenauszeichnung, etc.) eine unterschiedliche Auflösung und Framerate aufweisen. Denkbar ist der Einsatz einer digitalen Kamera 2 vom Typ Pointgrey Research GRAS-20S4M-C BW Grasshopper mit einer Auflösung von 1624 x 1224 Bildpunkten und einer Framerate bis zu 30 fps (Frames per Second).

Die digitalen Kameras 2 sind für den industriellen Einsatz ausgestattet und werden entweder kabellos (mit austauschbarem Akku und drahtloser Datenübertragung) oder kabelgebunden mit einer Recheneinheit (Industrie-PC) im Inneren des Fahrzeuges verbunden. Auf der Recheneinheit erfolgt die Verarbeitung der von den digitalen Kameras 2 gelieferten Bilddaten.

In der schematischen Ansicht gemäß Fig. 3 ist der als Lagerraum ausgebildete definierte Bereich 3 ersichtlich. Hierbei sind insbesondere zwei verschiedene Typen von Referenzmerkmalen von Typ 1 (T1) und von Typ 2 (T2) gezeigt.

Referenzmerkmale T1 sind hierbei stationäre Referenzmerkmale mit einem festgelegten Design, einem eindeutigen Identifikationsmerkmal und einer variablen Größe.

Diese besitzen z.B. eine viereckige Form (4 Eckpunkte) und können aus einem schwarzen Rand, einer weißen Fläche und schwarzen Zeichen (Buchstaben, Ziffern, Symbolen) bestehen. Die Zeichenkombination stellt ein eindeutiges Identifikationsmerkmal dar.

Beispiele sind am Boden, an Wänden oder Masten befindliche Markierungen (z.B. Lager- oder Lagergangmarkierung) oder Beschilderungen. Die Größe dieser Objekte kann je nach Umgebungsbedingung variieren. Markierungen bei Lagerplätzen können z.B. 40 x 30 cm groß sein, Markierungen in Lagergängen sind mit z.B. 80 x 60 cm etwas größer, Beschilderungen an Wänden oder Masten können z.B. auch 200 x 150 cm groß sein.

Stationäre Referenzmerkmale T2 sind jene mit einem festgelegten Design, keinem eindeutigen Identifikationsmerkmal und variabler Größe. Diese Referenzmerkmale T2 können jegliche stationäre kontrastreiche Objekte in der definierten Umgebung sein (z.B. Feuerlöscher, Regale, Masten, etc.). Ein weiteres Beispiel wäre ein rechter Winkel, welcher sich durch zwei Markierungslinien am Boden, welche sich ca. 90 Grad zueinander befinden, ergibt (siehe Fig. 3: A18/2 Eckpunkt eines Lagerplatzes). Diese Referenzmerkmale T2 besitzen kein eigenes eindeutiges Identifikationsmerkmal (z.B. in Form einer Zeichenkombination).

Stationäre Referenzmerkmale T3 sind jene mit keinem festgelegten Design, keinem eindeutigen Identifikationsmerkmal und variabler Größe. Diese Referenzmerkmale T3 sind alle kontrastreichen Merkmale jeglicher Größe und Form (z.B. Kanten von Waren oder Etiketten, Verschmutzungen am Boden, Fahrzeuge, etc.), welche sich zumeist nur für eine bestimmte Zeitdauer stationär an einem Ort befinden. Diese besitzen kein eigenes eindeutiges Identifikationsmerkmal (z.B. in Form einer Zeichenkombination).

Die digitale Karte des definierten Bereichs 3 bzw. der definierten Umgebung (z.B. Lager) besitzt ein definiertes (globales) Koordinatensystem, beinhaltet die Referenzmerkmale T1, T2, T3 und deren Eigenschaften (z.B. Koordinaten, Identifikationsmerkmal, etc.) und kann zur elektronischen Datenverarbeitung verwendet werden. Darüber hinaus kann die digitale Lagerkarte weitere spezifische Eigenschaften der definierten Umgebung beinhalten (z.B. globale Koordinaten und Abmessungen von Lagerplätzen, etc.).

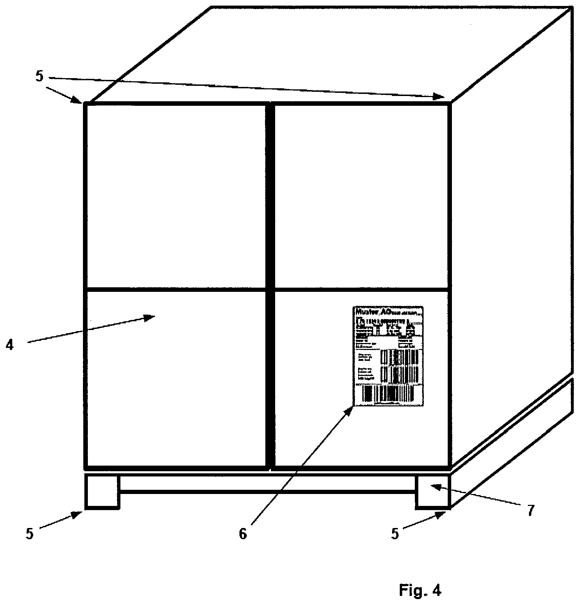

In Fig. 4 ist ein schematisches Beispiel für eine Ware 4 gezeigt, wobei insbesondere die Eckpunkte 5 der Ware 4 als temporäre Referenzmerkmale zwecks absoluter Positionsbestimmung herangezogen werden. Zudem kann die Ware 4 ein Warenetikett 6 aufweisen, welches wiederum ein eindeutiges Identifikationsmerkmal wie beispielsweise einen Barcode oder eine in Klarschrift ausgeführte eindeutige Identifikationsnummer, z.B. EAN 128, aufweisen kann.

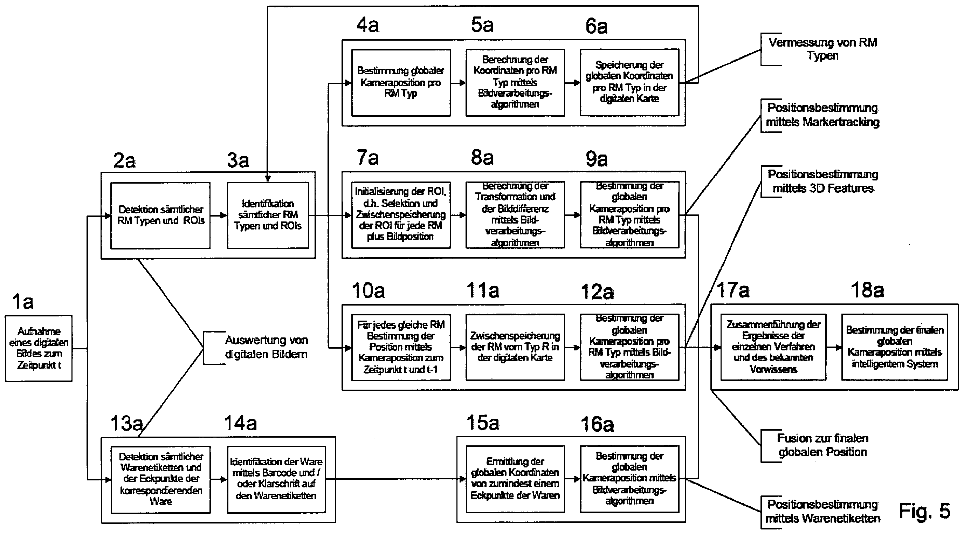

In Fig. 5 ist schematisch ein Flussdiagramm eines erfindungsgemäßen Verfahrens gezeigt, welches insgesamt 18 Verfahrensschritte umfasst. Hierbei wird insgesamt auf vier verschiedene Arten von Referenzmerkmalen Bezug genommen, welche wie folgt definiert sind:
A: ist ein Referenzmerkmal vom Typ 1 und initial, d.h. vor Verfahrensbeginn, bereits mit seinen Eigenschaften (vermessene Koordinaten, eindeutiges Identifikationsmerkmal) in der digitalen Karte gespeichert
V: ist ein Referenzmerkmal vom Typ 1 oder Typ 2, welches durch das Verfahren mit seinen Eigenschaften (vermessene Koordinaten, eindeutiges Indentifikationsmerkmal) in der digitalen Karte gespeichert wird und initial, d.h. vor Verfahrensbeginn in der digitalen Karte, nicht gespeichert ist
R: ist ein Referenzmerkmal vom Typ 1, Typ 2 oder Typ 3, welches nicht in der digitalen Karte gespeichert wird
Z: ist ein Referenzmerkmal vom Typ 1, Typ 2 oder Typ 3, welches temporär in der digitalen Karte gespeichert wird

Die einzelnen Verfahrensschritte 1a - 18a können wie folgt zusammengefasst werden.
1a - Aufnahme zumindest eines digitalen Bildes zu einem Zeitpunkt t.
2a - Detektion sämtlicher Referenzmerkmale der verschiedenen Typen sowie Detektion eines Ausschnitts des digitalen Bildes, in welchem sich ein Referenzmerkmal befindet (sogenannte Region of interest - ROI).
3a - Identifikation sämtlicher Referenzmerkmals-Typen und ROIs.
4a - Bestimmung der globalen, d.h. absoluten Kameraposition, und somit Position des Fahrzeuges pro Referenzmerkmal.
5a - Berechnung der Koordinaten pro Referenzmerkmal-Typ mittels bekannter Bildverarbeitungsalgorithmen.
6a - Speicherung der globalen Koordinaten pro Referenzmerkmal-Typ in der digitalen Karte. Damit ist die Erfassung und die Vermessung von ReferenzmerkmalTypen abgeschlossen und es können in einem weiteren Verfahrensschritt 3a die Referenzmerkmalstypen identifiziert werden.
7a - Initialisierung der ROI, d.h. Selektion und Zwischenspeicherung der ROI für jedes Referenzmerkmal plus Bildposition.
8a - Berechnung der Transformation und der Bilddifferenz mittels bekannter Bildverarbeitungsalgorithmen
9a - Bestimmung der globalen Kameraposition pro Referenzmerkmal-Typ mittels bekannter Bildverarbeitungsalgorithmen.

Verfahrensschritte 7a bis 9a stellen somit eine absolute Positionsbestimmung mittels Markertracking dar.
10a - Für jedes gleiche Referenzmerkmal wird die Position mittels Kameraposition zum Zeitpunkt t und einem davorliegenden Zeitpunkt t-1 bestimmt.
11a - Zwischenspeicherung der Referenzmerkmale vom Typ R in der digitalen Karte.
12a - Bestimmung der globalen Kameraposition pro Referenzmerkmal-Typ mittels bekannter Bildverarbeitungsalgorithmen.

Mit den Verfahrensschritten 10a bis 12a wird somit eine Positionsbestimmung mittels dreidimensionaler Merkmale durchgeführt.
13a - Detektion sämtlicher Waren, Etiketten und der Eckpunkte der korrespondierenden Ware.
14a - Identifikation der Ware mittels Barcode und/oder Klarschrift auf den Warenetiketten.
15a - Ermittlung der globalen Koordinaten oder zumindest eines Eckpunkts der Waren.
16a - Bestimmung der globalen Kameraposition mittels Bildverarbeitungsalgorithmen.

Verfahrensschritte 15a und 16a stellen somit eine weitere absolute Positionsbestimmung mittels der Warenetiketten dar.
17a - Zusammenführung der Ergebnisse der einzelnen Verfahren zur Positionsbestimmung und von weiteren Informationen, d.h. Vorwissen, dies kann insbesondere Folgendes sein:
   - Globale Koordination von Bereichen in der definierten Umgebung, welche vom Fahrzeug nicht be-/durchfahren werden können (z.B. Masten, Wände, Tore, Regale, Ware, etc.)
   - Maximal mögliche Positionsveränderung innerhalb einer Zeitspanne aufgrund der Leistungsdaten des jeweilig eingesetzten Fahrzeuges (max. Geschwindigkeit, min. Wendekreis, max. Beschleunigung/Verzögerung) in Kombination mit dem Vorwissen über die Bewegungshistorie (zurückgelegter Weg, Geschwindigkeit, Beschleunigung und Rotation)
   - Für das Fahrzeug nicht erreichbare Bereiche der definierten Umgebung bestimmt aus der Geometrie des Fahrzeuges (Länge/ Breite/Höhe)
18a - Bestimmung der finalen, globalen Kameraposition mittels Zustandsschätzungen in einem dynamischen Prozess basierend auf einem Filtersystem (z.B. Partikelfilter)

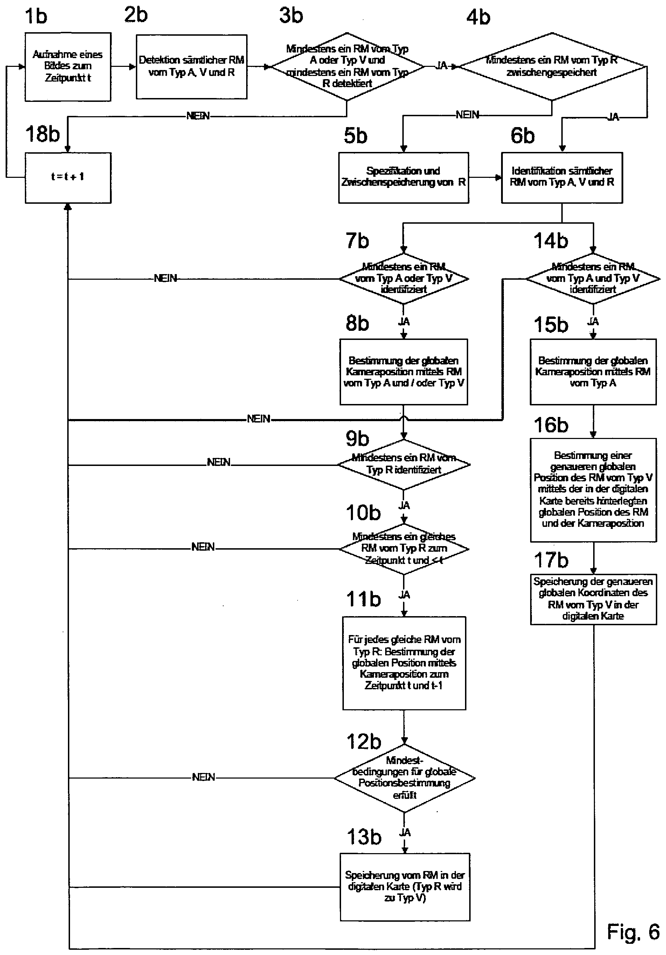

In Fig. 6 ist im Detail ein Verfahrensabschnitt zur Erkennung und Vermessung von Referenzmerkmalen im definierten Bereich 3 ersichtlich. Mit Hilfe dieses Verfahrensabschnitts wird auf einfache, aufwand- und kostensparende Weise die digitale Lagerkarte der definierten Umgebung erstellt. Diese digitale Karte dient als grundlegende Datenbasis für das beschriebene Verfahren zur kontinuierlichen Erfassung der Position von Fahrzeugen 1. In der definierten Umgebung 3 befinden sich an passenden Stellen einzelne Referenzmerkmale vom Typ A, d.h. z.B. ein Kreuzungspunkt des internen Lagergangs etc..

Im Einzelnen können die Verfahrensschritte wie folgt zusammengefasst werden:
1b - Aufnahme von digitalen Bildern durch auf Fahrzeug(en) installierten digitalen Kameras. Ein Fahrzeug bzw. mehrere Fahrzeuge führt(en) Fahrten in der definierten Umgebung in der Form durch, dass sämtliche relevante Bereiche der definierten Umgebung mittels digitaler Bilder erfasst werden.
2b - Detektion bedeutet die Erkennung (jedoch nicht die eindeutige Indentifikation) aller RMs vom Typ A, V und R mittels Bildverarbeitungsalgorithmen.
3b - Nur für den Fall, dass sich in diesem Bild zumindest ein RM vom Typ A oder V befindet, kann grundsätzlich eine absolute Positionsberechnung durchgeführt werden, ansonsten muss das zeitlich nachfolgende Bild analysiert werden.

Nur für den Fall, dass sich in diesem Bild zumindest ein RM vom Typ R befindet, kann die Bestimmung der absoluten Position dieses RMs durchgeführt werden, ansonsten muss das zeitlich nachfolgende Bild analysiert werden.
4b - Nur für den Fall, dass sich in diesem Bild zumindest ein RM vom Typ R befindet, kann das Ziel des Verfahrens, nämlich die Erkennung, Positionsbestimmung und Speicherung bis dato unbekannter RMs, in der digitalen Karte erfolgen. Für die Positionsbestimmung eines RMs vom Typ R sind zumindest zwei digitale Bilder mit unterschiedlichen Blickwinkeln (ausreichend große Parallaxe) notwendig (Abfrage auf Zwischenspeicherung des RMs vom Typ R, d.h. RM wurde in einem vorangegangen Bild bereits erkannt).
5b - Spezifikation bedeutet die Bestimmung der Eigenschaften (z.B. Form) für alle RMs vom Typ R mittels Bildverarbeitungsalgorithmen und deren Zwischenspeicherung.
6b - Identifikation bedeutet die eindeutige Wiedererkennung der Eigenschaften (Identifikationsmerkmal) von RMs vom Typ A, V und R mittels Bildverarbeitungsalgorithmen.
7b - Nur für den Fall, dass sich in diesem Bild zumindest ein RM vom Typ A oder V befindet und dieser eindeutig identifiziert wurde, kann eine absolute Positionsberechnung durchgeführt werden, ansonsten muss das zeitlich nachfolgende Bild analysiert werden.
8b - Berechnung der globalen Kameraposition mittels Bildverarbeitungsalgorithmen unter Berücksichtigung aller unter Punkt 6 identifizierten RMs vom Typ A oder V.
9b-11b - Nur für den Fall, dass sich in diesem Bild zumindest ein RM vom Typ R befindet, dieser eindeutig identifiziert und bereits zwischengespeichert wurde, kann eine absolute Positionsberechnung des RMs vom Typ R und Anwendung der unter Punkt 8 berechneten globalen Kameraposition mittels Bildverarbeitungsalgorithmen durchgeführt werden, ansonsten muss das zeitlich nachfolgende Bild analysiert werden.
12b-13b - Eine Speicherung des RMs vom Typ R in der digitalen Karte erfolgt nur unter der Voraussetzung der Erfüllung von Mindestbedingungen (z.B. ausreichend großer Parallaxe bei zwei unterschiedlichen Bildern mit unterschiedlichen Blickwinkeln) bei der unter Punkt 11 berechneten absoluten Position.
14b-17b - Kontinuierlich stattfindendes Optimierungsverfahren der Genauigkeit der in der digitalen Karte hinterlegten globalen Position von RMs vom Typ V mittels der Anwendung der unter Punkt 11-12 beschriebenen Algorithmen.

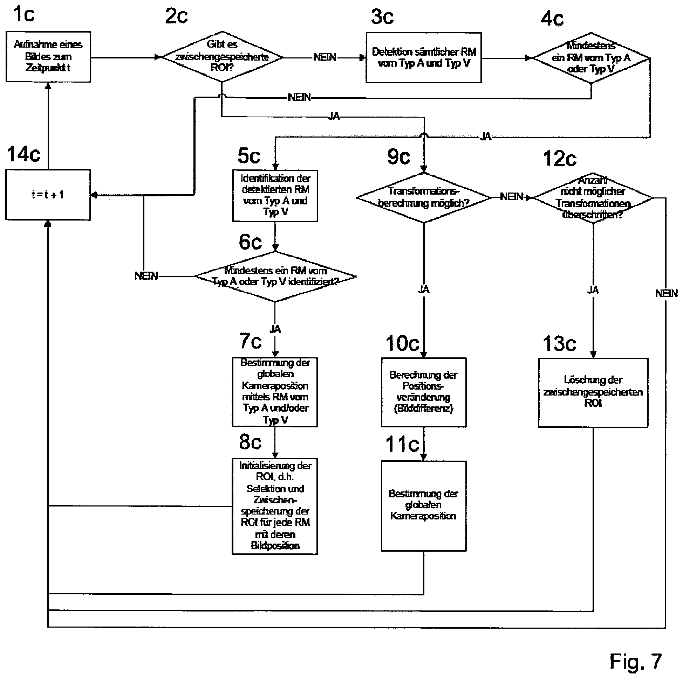

In Fig. 7 ist im Detail ein Verfahrensabschnitt zur absoluten Positionsbestimmung mittels der kontinuierlichen Verfolgung von Referenzmerkmalen vom Typ 1 und 2 gezeigt. Die ROI (Region of interest) stellt hierbei jenen Ausschnitt des digitalen Bildes dar, in welchem sich das Referenzmerkmal befindet.

Die ROI wird bei Identifikation eines RMs des Typs A oder Typs V erstmals initialisiert und nur im Bedarfsfall (z.B. zu große Distanz zwischen der aktuellen globalen und jener Kameraposition bei der erstmaligen Initialisierung der ROI) zu einem späteren Zeitpunkt neu initialisiert. Bei der Initialisierung erfolgt die Speicherung des Bildausschnittes und der Initialtransformation dieses Bildausschnittes, welche in Bezug auf das jeweils aktuelle Bild berechnet wird.

Die ROI wird mittels Transformation (z.B. Homographie,...) vom Bild zum vorherigen Zeitpunkt t-1 in das Bild zum nachfolgenden Zeitpunkt projiziert. Aus der Bilddifferenz wird die Transformationsveränderung (und damit die Positionsveränderung) mittels Optimierungsmethoden neu berechnet.

Im Einzelnen können die Verfahrensschritte wie folgt beschrieben werden:
1c - Aufnahme von digitalen Bildern durch auf Fahrzeug(en) installierten digitalen Kameras in einer definierten Umgebung.
2c - Suche nach zwischengespeicherten ROIs, welche als Grundlage für die Transformationsberechnung fungieren.
3c - Detektion bedeutet die Erkennung (jedoch nicht die eindeutige Identifikation) aller RMs vom Typ A und Typ V mittels Bildverarbeitungsalgorithmen.
4c - Nur für den Fall, dass sich in diesem Bild zumindest ein RM vom Typ A oder Typ V befindet, kann grundsätzlich eine absolute Positionsberechnung durchgeführt werden, ansonsten muss das zeitlich nachfolgende Bild analysiert werden.
5c - Identifikation bedeutet die eindeutige Wiedererkennung der Eigenschaften (Identifikationsmerkmal) von RMs vom Typ A und Typ V mittels Bildverarbeitungsalgorithmen.
6c - Für den Fall, dass sich in diesem Bild zumindest ein RM vom Typ A oder Typ V befindet und dieser eindeutig identifiziert wurde, kann eine absolute Positionsberechnung durchgeführt werden, ansonsten muss das zeitlich nachfolgende Bild analysiert werden.
7c - Berechnung der globalen Kameraposition mittels Bildverarbeitungsalgorithmen unter Berücksichtigung aller unter Punkt 5 identifizierten RMs vom Typ A oder Typ V.
8c - Initialisierung der ROI, d.h. Selektion und Zwischenspeicherung der ROI für jedes RM mit deren Bildposition.
9c - Transformationsberechnung, d.h. die Suche nach dem Zusammenhang zwischen der zwischengespeicherten ROI und dem RM in einem zeitlich nachfolgenden digitalen Bild.
10c - Berechnung der Positionsveränderung mittels Bildverarbeitungsalgorithmen auf Basis der Ergebnisse von Punkt 9.
11c - Berechnung der globalen Kameraposition mittels Bildverarbeitungsalgorithmen unter Berücksichtigung aller unter Punkt 10 ermittelten Positionsveränderungen.
12c - Prüfung, in wie vielen, der Initialisierung der ROI nachgelagerten Bildern keine Zusammenhänge laut Punkt 9 gefunden werden konnten.
13c - Wird ein definierter Schwellwert gemäß der in Punkt 12 beschriebenen Prüfung überschritten, wird die zwischengespeicherte ROI gelöscht.

Eine Identifikation des Referenzmerkmales ist somit vorteilhafterweise nur einmal nötig und durch eine wesentlich robustere und auch auf größere Distanzen durchführbare Positionsbestimmung ermöglicht. Darüber hinaus ist eine derartige Positionsbestimmung gegen Verschmutzungen im definierten Bereich 3 unempfindlich.

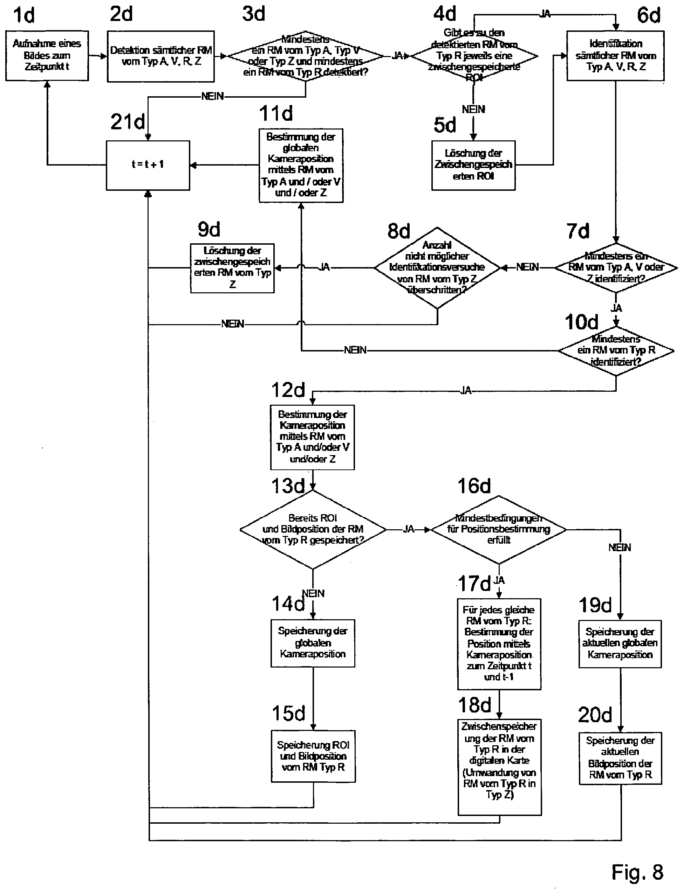

In Fig. 8 ist im Detail die absolute Positionsbestimmung mittels der kontinuierlichen Verfolgung von Referenzmerkmalen vom Typ 3 dargestellt:
1d - Aufnahme von digitalen Bildern durch auf Fahrzeug(en) installierten digitalen Kameras. Ein Fahrzeug bzw. mehrere Fahrzeuge führt(en) Fahrten in der definierten Umgebung in der Form durch, dass sämtliche relevante Bereiche der definierten Umgebung mittels digitaler Bilder erfasst werden.
2d - Detektion bedeutet die Erkennung (jedoch nicht die eindeutige Identifikation) aller RMs vom Typ A, V, R und Z mittels Bildverarbeitungsalgorithmen.
3d - Nur für den Fall, dass sich in diesem Bild zumindest ein RM vom Typ A, V oder Z befindet, kann grundsätzlich eine absolute Positionsberechnung durchgeführt werden, ansonsten muss das zeitlich nachfolgende Bild analysiert werden. Nur für den Fall, dass sich in diesem Bild zumindest ein RM vom Typ R befindet, kann die Bestimmung der absoluten Position dieses RMs durchgeführt werden, ansonsten muss das zeitlich nachfolgende Bild analysiert werden.
4d - Nur für den Fall, dass es zu einem detektierten RM vom Typ R eine zwischengespeicherte ROI gibt, kann das Ziel des Verfahrens, nämlich die Positionsbestimmung der Kameraposition durch RMs vom Typ R erreicht werden.
5d - Löschung aller zwischengespeicherten ROIs, für die das korrespondierende RM vom Typ R nicht detektiert wurde.
6d - Identifikation bedeutet die eindeutige Wiedererkennung der Eigenschaften (Identifikationsmerkmal) von RMs vom Typ A, V, Z und R mittels Bildverarbeitungsalgorithmen.
7d - Nur für den Fall, dass sich in diesem Bild zumindest ein RM vom Typ A, V oder Z befindet und dieses eindeutig identifiziert wurde, kann eine absolute Positionsberechnung durchgeführt werden, ansonsten muss das zeitlich nachfolgende Bild analysiert werden.
8d-9d - Wird ein definierter Schwellwert gemäß der in Punkt 6 beschriebenen Identifikation überschritten, wird die zwischengespeicherte RM vom Typ Z gelöscht.
9d siehe 8d.
10d - Nur für den Fall, dass sich in diesem Bild zumindest ein RM vom Typ R befindet und dieses eindeutig identifiziert wurde, kann eine Bestimmung der Position mittels Kameraposition zum Zeitpunkt t und t-1 durchgeführt werden, ansonsten muss das zeitlich nachfolgende Bild analysiert werden.
11d - Berechnung der globalen Kamerapostion mittels Bildverarbeitungsalgorithmen unter Berücksichtigung aller unter Punkt 6 identifizierten RMs vom Typ A und/oder V und/oder Z, jedoch ohne eine Identifikation eines RMs vom Typ R.
12d - Berechnung der globalen Kameraposition mittels Bildverarbeitungsalgorithmen unter Berücksichtigung aller unter Punkt 6 identifizierten RMs vom Typ A und/oder V und/oder Z, jedoch mit einer Identifikation eines RMs vom Typ R.
13d - Suche nach zwischengespeicherten ROIs und Bildpositionen der RMs vom Typ R, welche als Grundlage für die Positionsbestimmung mittels Bildverarbeitungsalgorithmen fungieren.
14d - Speicherung der globalen Kameraposition.
15d - Speicherung der ROI und Bildposition von RM Typ R.
16d - Eine Positionsbestimmung unter der Verwendung der RMs vom Typ R erfolgt nur unter der Voraussetzung der Erfüllung von Mindestbedingungen (z.B. ausreichend großer Parallaxe bei zwei unterschiedlichen Bildern mit unterschiedlichen Blickwinkeln).
17d - Mittels Bildverarbeitungsalgorithmen wird für jedes gleiche RM vom Typ R eine globale Position mittels Kameraposition (ermittelt unter Punkt 12) zum Zeitpunkt t und t-1 berechnet.
18d - Die unter Punkt 17d ermittelte Position der RMs vom Typ R wird in der digitalen Karte zwischengespeichert und damit das RM Typ R in das RM Typ Z umgewandelt.
19d-20d - Wird die unter Punkt 16d beschriebene Mindestbedingung nicht erfüllt, erfolgt die Speicherung der aktuellen globalen Kameraposition und Bildposition der RMs vom Typ R.

Mit Hilfe einer derartigen Positionsbestimmung ist somit keine Berechnung einer reinen Relativbewegung (relative Positionsbestimmung) erforderlich, sondern es kann zu jedem Zeitpunkt auf absolute Koordinaten zurückgegriffen werden, wodurch das Verfahren zur Positionsbestimmung robuster wird und zugleich gegenüber bekannten Verfahren eine genauere und robustere Positionsbestimmung erzielt wird.

## Patentansprüche

1. Verfahren zum Erfassen der Position eines Fahrzeuges (1) in einem definierten Bereich (3), wobei eine ein definiertes Koordinatensystem aufweisende digitale Karte des definierten Bereichs (3) erstellt wird, wobei die digitale Karte stationäre Referenzmerkmale (T1) mit einem eindeutigen Identifikationsmerkmal beinhaltet, bevor von zumindest einem Teilbereich des definierten Bereichs (3), vorzugsweise dem gesamten definierten Bereich (3), digitale Bilder zum Erfassen und zur Detektion weiterer Referenzmerkmale (T1, T2, T3) aufgenommen werden, wobei auch stationäre Referenzmerkmale (T2, T3) ohne eindeutiges Identifikationsmerkmal und/oder temporäre Referenzmerkmale ohne eindeutiges Identifikationsmerkmal erfasst und detektiert werden und der digitalen Karte und/oder einem zugeordneten Zwischenspeicher hinzugefügt werden, so dass darauf folgend die absolute Position des Fahrzeuges (1) in dem definierten Bereich (3) bestimmbar ist, indem von dem Fahrzeug (1) aus ein digitales Bild von einem Teil des definierten Bereichs (3) aufgenommen wird und in dem digitalen Bild Referenzmerkmale (T1, T2, T3) detektiert und gegebenenfalls identifiziert werden, wobei die absolute Positionsbestimmung auf Basis der detektierten und gegebenenfalls identifizierten stationären und/oder temporären Referenzmerkmale (T1, T2, T3) erfolgt.

2. Verfahren nach Anspruch 1, **dadurch gekennzeichnet, dass** beim Abstellen bzw. dem Vorbeifahren mit dem Fahrzeug (1) an einer ein Identifikationsmerkmal aufweisenden Ware (4) in dem definierten Bereich (3) die Koordinaten der Ware (4), vorzugsweise der Eckpunkte (5) der Ware, dem Zwischenspeicher hinzugefügt werden.

3. Verfahren nach Anspruch 2, **dadurch gekennzeichnet, dass** bei Detektion eines Identifikationsmerkmals einer Ware (4) und zumindest eines Eckpunkts (5) der Ware (4) mittels der im Zwischenspeicher enthaltenen Koordinaten eine absolute Positionsbestimmung des Fahrzeuges (1) erfolgt.

4. Verfahren nach Anspruch 3, **dadurch gekennzeichnet, dass** eine absolute Positionsbestimmung mittels Verfolgung von stationären Referenzmerkmalen (T1, T2) und eine absolute Positionsbestimmung mittels Verfolgung von temporären Referenzmerkmalen (T3) und/oder der Identifikation einer Ware (4) erfolgt und die absolute Position des Fahrzeuges über eine Fusion von mittels der absoluten Positionsbestimmungen ermittelten Koordinaten erfolgt.

5. Verfahren nach einem der Ansprüche 1 bis 4, **dadurch gekennzeichnet, dass** nach Aufnahme eines digitalen Bildes zwecks Positionsbestimmung zumindest ein Bildausschnitt, in welchem sich zumindest ein stationäres Referenzmerkmal (T1, T2) befindet, ausgewählt und gespeichert wird, und der Bildausschnitt zur absoluten Positionsbestimmung des Fahrzeuges (1) auf Grundlage von Markertracking mittels Transformation in ein nachfolgend aufgenommenes digitales Bild projiziert wird.

6. Verfahren nach einem der Ansprüche 1 bis 5, **dadurch gekennzeichnet, dass** vorzugsweise jedes in einem aufgenommenen digitalen Bild identifizierte Referenzmerkmal (T1, T2, T3), das nicht in der digitalen Karte gespeichert ist, zwischengespeichert wird und das zwischengespeicherte Referenzmerkmal (T1, T2, T3) zur absoluten Positionsbestimmung verwendet wird, sofern das zwischengespeicherte Referenzmerkmal (T1, T2, T3) in einem nachfolgend aufgenommenen digitalen Bild identifiziert wird.

7. Verfahren nach einem der Ansprüche 4 bis 6, **dadurch gekennzeichnet, dass** bei der Bestimmung der absoluten Position nicht be-/durchfahrbare bzw. erreichbare Teilbereiche des definierten Bereichs (3) bzw. maximal mögliche Positionsveränderungen innerhalb einer Zeitspanne aufgrund von Leistungsdaten des Fahrzeuges (1) in Kombination mit einer Bewegungshistorie berücksichtigt werden.

8. System zum Erfassen der Position eines Fahrzeuges (1) in einem definierten Bereich (3), wobei ein Speichern zur Speicherung einer ein definiertes Koordinatensystem des definierten Bereichs aufweisenden digitalen Karte vorgesehen ist, wobei die digitale Karte stationäre Referenzmerkmale (T1) mit einem eindeutigen Identifikationsmerkmal beinhaltet, und eine bildgebende Sensoreinrichtung (2) zum Erfassen und zur Detektion weiterer stationärer Referenzmerkmale (T2, T3) ohne eindeutigem Identifikationsmerkmal und/oder temporärer Referenzmerkmale mit bzw. ohne eindeutigem Identifikationsmerkmal vorgesehen ist, die der digitalen Karte und/oder einem zugeordneten Zwischenspeicher zugeordnet sind, wobei die bildgebende Sensoreinrichtung (2) zudem zum Erfassen eines digitalen Bildes eines Teil des definierten Bereichs (3) und zur Detektion und gegebenenfalls Identifikation von in dem digitalen Bild enthaltenen Referenzmerkmalen (T1, T2, T3) vorgesehen ist, so dass eine absolute Positionsbestimmung eines mit der bildgebenden Sensoreinrichtung (2) versehenen Fahrzeuges (1) auf Basis der detektierten und gegebenenfalls identifizierten stationären und/oder temporären Referenzmerkmale (T1, T2, T3) erfolgt.

9. System nach Anspruch 8, **dadurch gekennzeichnet, dass** als bildgebende Sensoreinrichtung (2) zumindest eine digitale Kamera vorgesehen ist.

## Claims

1. Method for sensing the position of a vehicle (1) in a defined region (3), a digital map of the defined region (3) which has a defined coordinate system being created, the digital map containing stationary reference features (T1) with a unique identification feature, before digital images of at least one section of the defined region (3), preferably the entire defined region (3), are recorded for the purpose of sensing and detecting further reference features (T1, T2, T3), stationary reference features (T2, T3) without a unique identification feature and/or temporary reference features without a unique identification feature also being sensed and detected and being added to the digital map and/or an associated buffer, with the result that the absolute position of the vehicle (1) in the defined region (3) can then be determined by recording a digital image of part of the defined region (3) from the vehicle (1) and detecting and possibly identifying reference features (T1, T2, T3) in the digital image, the absolute position being determined on the basis of the detected and possibly identified stationary and/or temporary reference features (T1, T2, T3) .

2. Method according to Claim 1, **characterized in that**, when parking at or using the vehicle (1) to move past a product (4) having an identification feature in the defined region (3), the coordinates of the product (4), preferably the corner points (5) of the product, are added to the buffer.

3. Method according to Claim 2, **characterized in that**, upon detection of an identification feature of a product (4) and at least one corner point (5) of the product (4), an absolute position of the vehicle (1) is determined by means of the coordinates contained in the buffer.

4. Method according to Claim 3, **characterized in that** an absolute position is determined by tracking stationary reference features (T1, T2) and an absolute position is determined by tracking temporary reference features (T3) and/or the identification of a product (4), and the absolute position of the vehicle is effected by merging coordinates determined by means of the absolute position determinations.

5. Method according to one of Claims 1 to 4, **characterized in that**, after recording a digital image for the purpose of position determination, at least one image section in which at least one stationary reference feature (T1, T2) is situated is selected and stored, and the image section is projected for the purpose of determining the absolute position of the vehicle (1) on the basis of marker tracking by means of transformation into a subsequently recorded digital image.

6. Method according to one of Claims 1 to 5, **characterized in that** each reference feature (T1, T2, T3) which is identified in a recorded digital image and is not stored in the digital map is preferably buffered and the buffered reference feature (T1, T2, T3) is used to determine the absolute position provided that the buffered reference feature (T1, T2, T3) is identified in a subsequently recorded digital image.

7. Method according to one of Claims 4 to 6, **characterized in that**, when determining the absolute position, sections of the defined region (3) which cannot be driven on/passed through or reached and/or maximum possible position changes within a period are taken into account on the basis of performance data relating to the vehicle (1) in combination with a movement history.

8. System for sensing the position of a vehicle (1) in a defined region (3), a storing operation being provided for the purpose of storing a digital map having a defined coordinate system of the defined region, the digital map containing stationary reference features (T1) with a unique identification feature, and an imaging sensor device (2) being provided for the purpose of sensing and detecting further stationary reference features (T2, T3) without a unique identification feature and/or temporary reference features with or without a unique identification feature, which are assigned to the digital map and/or to an associated buffer, the imaging sensor device (2) also being provided for the purpose of capturing a digital image of part of the defined region (3) and detecting and possibly identifying reference features (T1, T2, T3) contained in the digital image, with the result that an absolute position of a vehicle (1) provided with the imaging sensor device (2) is determined on the basis of the detected and possibly identified stationary and/or temporary reference features (T1, T2, T3).

9. System according to Claim 8, **characterized in that** at least one digital camera is provided as the imaging sensor device (2).

## Revendications

1. Procédé pour capturer la position d'un véhicule (1) dans une zone définie (3), une carte numérique qui présente un système de coordonnées défini de la zone définie (3) étant créée, la carte numérique contenant des caractéristiques de référence fixes (T1) avec une caractéristique d'identification univoque, avant que des images numériques d'au moins une zone partielle de la zone définie (3), de préférence la totalité de la zone définie (3), soient enregistrées en vue de capturer et de détecter des caractéristiques de référence (T1, T2, T3) supplémentaires, des caractéristiques de référence fixes (T2, T3) sans caractéristique d'identification univoque et/ou caractéristiques de référence temporaires étant également capturées et détectées sans caractéristique d'identification univoque et étant ajoutées à la carte numérique et/ou à une mémoire temporaire associée, de sorte que la position absolue du véhicule (1) peut ensuite être déterminée dans la zone définie (3) en ce qu'une image numérique d'une partie de la zone définie (3) est enregistrée depuis le véhicule (1) et des caractéristiques de référence (T1, T2, T3) sont détectées et éventuellement identifiées dans l'image numérique, la détermination de la position absolue s'effectuant sur la base des caractéristiques de référence (T1, T2, T3) détectées et éventuellement fixes identifiées et/ou temporaires.

2. Procédé selon la revendication 1, **caractérisé en ce que** lors de l'arrêt ou du passage avec le véhicule (1) au niveau d'une marchandise (4) qui possède une caractéristique d'identification dans la zone définie (3), les coordonnées de la marchandise (4), de préférence les coins (5) de la marchandise, sont ajoutés à la mémoire temporaire.

3. Procédé selon la revendication 2, **caractérisé en ce que** lors de la détection d'une caractéristique d'identification d'une marchandise (4) et d'au moins un coin (5) de la marchandise (4), une détermination de la position absolue du véhicule (1) est effectuée au moyen des coordonnées contenues dans la mémoire temporaire.

4. Procédé selon la revendication 3, **caractérisé en ce qu'**une détermination de la position absolue est effectuée au moyen du suivi de caractéristiques de référence fixes (T1, T2) et une détermination de la position absolue est effectuée au moyen du suivi de caractéristiques de référence temporaires (T3) et/ou de l'identification d'une marchandise (4) et la position absolue du véhicule est effectuée par le biais d'une fusion de coordonnées déterminées au moyen de la détermination de la position absolue.

5. Procédé selon l'une des revendications 1 à 4, **caractérisé en ce qu'**après l'enregistrement d'une image numérique en vue de la détermination de la position, au moins une portion d'image dans laquelle se trouve au moins une caractéristique de référence fixe (T1, T2) est sélectionnée et mise en mémoire, et la portion d'image est projetée dans une image numérique enregistrée suivante en vue de la détermination de la position absolue du véhicule (1) sur la base du suivi de marqueurs au moyen d'une transformation.

6. Procédé selon l'une des revendications 1 à 5, **caractérisé en ce que** de préférence chaque caractéristique de référence (T1, T2, T3) identifiée dans une image numérique enregistrée et qui n'est pas mise en mémoire dans la carte numérique est mémorisée temporairement et la caractéristique de référence (T1, T2, T3) mémorisée temporairement est utilisée pour la détermination de la position absolue, sous réserve que la caractéristique de référence (T1, T2, T3) mémorisée temporairement est identifiée dans une image numérique enregistrée suivante.

7. Procédé selon l'une des revendications 4 à 6, **caractérisé en ce que** les zones partielles de la zone définie (3) qui ne sont pas praticables/traversables ou accessibles ou les changements de position maximums possibles à l'intérieur d'un intervalle de temps du fait des données de puissance du véhicule (1) en combinaison avec un historique de déplacement sont pris en compte lors de la détermination de la position absolue.

8. Système pour capturer la position d'un véhicule (1) dans une zone définie (3), une mémoire étant présente pour mémoriser une carte numérique qui présente un système de coordonnées défini de la zone définie, la carte numérique contenant des caractéristiques de référence fixes (T1) avec une caractéristique d'identification univoque, et un dispositif de détection (2) de formation d'image destiné à capturer et à détecter des caractéristiques de référence fixes (T2, T3) supplémentaires sans caractéristique d'identification univoque et/ou caractéristique de référence temporaire avec ou sans caractéristique d'identification univoque, lesquelles sont ajoutées à la carte numérique et/ou à une mémoire temporaire associée, le dispositif de détection (2) de formation d'image servant en outre à la capture d'une image numérique d'une partie de la zone définie (3) et à la détection et éventuellement à l'identification de caractéristiques de référence (T1, T2, T3) contenues dans l'image numérique, de sorte qu'une détermination de la position absolue d'un véhicule (1) pourvu du dispositif de détection (2) de formation d'image est effectuée sur la base des caractéristiques de référence (T1, T2, T3) détectées et éventuellement fixes identifiées et/ou temporaires.

9. Système selon la revendication 8, **caractérisé en ce que** le dispositif de détection (2) de formation d'image utilisé est au moins une caméra numérique.
